(19) Europäisches Patentamt / European Patent Office / Office européen des brevets

(11) **EP 3 366 800 B1**

(12) **EUROPEAN PATENT SPECIFICATION**

(45) Date of publication and mention
of the grant of the patent:
**25.03.2020 Bulletin 2020/13**

(21) Application number: **16857379.8**

(22) Date of filing: **14.10.2016**

(51) Int Cl.:
*C21D 8/06* (2006.01)     *C21D 9/32* (2006.01)
*C21D 9/40* (2006.01)     *C22C 38/60* (2006.01)
*C21D 1/10* (2006.01)     *C22C 38/38* (2006.01)
*C22C 38/34* (2006.01)     *C22C 38/00* (2006.01)
*C22C 38/02* (2006.01)     *C22C 38/04* (2006.01)
*C22C 38/06* (2006.01)

(86) International application number:
**PCT/JP2016/080576**

(87) International publication number:
**WO 2017/069064 (27.04.2017 Gazette 2017/17)**

(54) **STEEL FOR MACHINE STRUCTURAL USE AND INDUCTION-HARDENED STEEL COMPONENT**

STAHL ZUR VERWENDUNG IM MASCHINENBAU UND INDUKTIONSGEHÄRTETE STAHLKOMPONENTE

ACIER POUR UTILISATION EN STRUCTURE DE MACHINE ET COMPOSANT EN ACIER TREMPÉ PAR INDUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.10.2015 JP 2015205631**

(43) Date of publication of application:
**29.08.2018 Bulletin 2018/35**

(73) Proprietor: **Nippon Steel Corporation**
**Tokyo (JP)**

(72) Inventors:
• **MIYANISHI Kei**
  **Tokyo 100-8071 (JP)**
• **SHIGA Akira**
  **Tokyo 100-8071 (JP)**
• **HASEGAWA Hajime**
  **Tokyo 100-8071 (JP)**
• **MIZUKAMI Hideo**
  **Tokyo 100-8071 (JP)**

(74) Representative: **Vossius & Partner**
**Patentanwälte Rechtsanwälte mbB**
**Siebertstrasse 3**
**81675 München (DE)**

(56) References cited:
**EP-A1- 1 528 114**     **WO-A1-2012/008405**
**WO-A1-2015/125915**   **JP-A- H10 296 396**
**JP-A- 2003 293 081**   **JP-A- 2003 293 081**
**JP-A- 2005 154 886**   **JP-A- 2014 208 885**

• **HIDEO MIZUKAMI: 'Prediction of Solid-Liquid Interfacial Energy of Steel during Solidification and Control of Dendrite Arm Spacing' JOURNAL OF THE IRON & STEEL INSTITUTE OF JAPAN vol. 97, no. 9, 2011, pages 457 - 466, XP055527315**

## Description

[Technical Field of the Invention]

The present invention relates to a steel for machine structural use and an induction-hardened steel component, and particularly relates to an induction-hardened steel component adopted in power transmission components (for example, gears, bearings, CVT sheaves, and shafts) used for automobiles, construction machines, farm machines, power generating windmills, and other industrial machinery, and a steel for machine structural use as a base forming material thereof.

[Related Art]

In the related art, power transmission components such as gears have often been used after being subjected to surface-hardening treatment. As a method for surface-hardening treatment, carburizing, nitriding, or induction hardening has been employed. Among these, "carburizing" is aimed at surface-hardening performed by highly carbonizing a surface layer of a material in which the matrix (base metal) indicates high toughness. Carburizing is mainly applied to materials for gears and automobile components (CVT, CVJ) for the purpose of improving fatigue strength (surface fatigue strength). However, batch processing performed in a gas atmosphere is the mainstream of carburizing treatment, requiring considerable energy and cost, for example, heating to a temperature near 930°C and retention for several hours or longer. In addition, in an actual operation, there are also a problem of environmental deterioration accompanying treatment of carburizing materials and a problem of difficulties in realizing in-line processing.

Therefore, in order to solve the problems, studies have been done to acquire desired strength characteristics through only induction hardening. The reason is that induction hardening is extremely advantageous to shortening the time of surface-hardening treatment, reducing energy, and sustaining a clean environment.

In the related art, in a case where components are manufactured through carburizing, so-called case hardening steels having the C content of approximately 0.2%, such as JIS SCr420 and SCM420 have been used. The biggest reason for using such steels having a low C content as materials is to ensure machinability. Although the C content is comparatively low in these steels, the C content in a surface layer area increases through carburizing after being processed into a component, and its surface hardness increases through hardening thereafter. Accordingly, desired component strength or surface fatigue strength can be acquired.

Meanwhile, in a case of acquiring component strength through induction hardening without performing carburizing treatment, in order to acquire appropriate surface hardness, the C content in a steel needs to be approximately 0.4%. However, in this case, since hardness of the steel increases before cutting, machinability deteriorates. That is, in a case where components which have been manufactured through carburizing are manufactured through induction hardening, the biggest problem is the machinability of a steel, and there are demands for a steel of which machinability does not deteriorate even though the steel is hardened due to the increased C content.

In regard to induction hardening, for example, Patent Document 1 discloses a steel for induction hardening, in which Si is limited to 0.50% or less, Al is limited to 0.10% or less, and the area fraction of martensite in the metallographic structure before induction hardening is controlled to 70% or more. According to the method in Patent Document 1, the strength of a steel is remarkably improved. However, in the technology of Patent Document 1, although the C content contained in a steel is needed to be at least 0.35% or more in order to acquire appropriate surface hardness of a component to be subjected to induction hardening, no examination has been performed in regard to the improvement of machinability. Therefore, in the steel for induction hardening of Patent Document 1, workability, particularly machinability is low.

Patent Document 2 has proposed a steel for induction hardening having excellent machinability. Patent Document 2 discloses a method of improving machinability by appropriately controlling area ratios of ferrite, pearlite, and bainite, controlling the average aspect ratio of ferrite grains and the grain-to-grain distance of the ferrite grains within a particular range, and essentially adding particular amounts of Al and B as a chemical composition of the steel. However, in the steel of Patent Document 2, an inner hardness is high due to the small area ratio of ferrite, ranging from 1% to 5%. Since the inner hardness does not change before and after induction hardening, high inner hardness denotes that hardness before machining is high and machinability is low. In such steels having high hardness, there is a high possibility that breakage such as chippage of a tool will occur during cutting, and applicable cutting conditions are limited, and there are cases where productivity is degraded.

In addition, Patent Document 3 has proposed a technology in which machinability of a steel for induction hardening is improved by increasing the Al content. Although Patent Document 3 describes that machinability of a steel for induction hardening is improved, since no comparative examination is performed between machinability of a steel of the invention and machinability of a case hardening steel, it is uncertain whether favorable machinability can be achieved to the same extent as that of a case hardening steel. In addition, in Patent Document 3, since the Al content needs to be more than 0.100%, austenitic transformation is unlikely to be completed during induction heating, and there is concern that hardenability is degraded.

Patent Document 4 relates to a specific steel for machine structural use having uniformly dispersed fine sulfide based inclusions which essentially consists of MnS and in which the atomic % ratio of Mn to S satisfies Mn/S=0.6 to 1.4 and more preferably about 1:1 are present by ≥5000 pieces/mm$^2$ per unit area and S is contained by 0.05 to 0.40%.

[Prior Art Document]

[Patent Document]

[Patent Document 1] Japanese Unexamined Patent Application, First Publication No. 2007-131871

[Patent Document 2] Japanese Unexamined Patent Application, First Publication No. 2012-219334

[Patent Document 3] Japanese Patent No. 4659139

[Patent Document 4] Japanese Unexamined Patent Application, Publication No. 2003-293081

[Disclosure of the Invention]

[Problems to be Solved by the Invention]

The present invention has been made in consideration of the foregoing circumstances. An object thereof is to provide a steel for machine structural use having excellent machinability and having excellent surface fatigue strength after induction hardening, and an induction-hardened steel component having excellent surface fatigue strength.

[Means for Solving the Problem]

(1) According to an aspect of the present invention, there is provided a steel for machine structural use including, as a chemical composition, by mass%, C: 0.40% to 0.70%, Si: 0.15% to 3.00%, Mn: 0.30% to 2.00%, Cr: 0.01% or more and less than 0.50%, S: 0.003% to 0.070%, Bi: more than 0.0001% and 0.0050% or less, N: 0.0030% to 0.0075%, Al: 0.003% to 0.100%, P: 0.050% or less, B: 0% to 0.0050%, Mo: 0% to 0.20%, Ni: 0% to 1.00%, Cu: 0% to 1.00%, Ca: 0% to 0.0050%, Mg: 0% to 0.0050%, Zr: 0% to 0.0050%, Rem: 0% to 0.0050%, Ti: 0% to 0.20%, Nb: 0% to 0.20%, V: 0% to 0.35%, Sb: 0% to 0.015%, Te: 0% to 0.20%, Pb: 0% to 0.50%, and a remainder consisting of Fe and impurities, in which an following Expression (1a) and an following Expression (2a) are satisfied, and a presence density of MnS having an equivalent circle diameter of smaller than 2.0 μm is 300 pieces/mm$^2$ or more in a cross section parallel to a longitudinal direction.

$$290{\times}C+50{\times}Si+430{\geq}620 \ ... \ (1a)$$

$$d+3\sigma<20 \ ... \ (2a)$$

Here, C and Si in the Expression (1a) represent C and Si contents by mass%, d in the Expression (2a) represents an average equivalent circle diameter of the MnS in an unit of μm having the equivalent circle diameter of 1.0 μm or greater, and σ in the Expression (2a) represents a standard deviation of the equivalent circle diameter of the MnS having the equivalent circle diameter of 1.0 μm or greater.

(2) The steel for machine structural use according to (1) may include, as the chemical composition, by mass%, one or more selected from the group consisting of B: 0.0003% to 0.0050%, Mo: 0.01% to 0.20%, Ni: 0.05% to 1.00%, and Cu: 0.05% to 1.00%.

(3) The steel for machine structural use according to (1) or (2) may include, as the chemical composition, by mass%, one or more selected from the group consisting of Ca: 0.0003% to 0.0050%, Mg: 0.0003% to 0.0050%, Zr: 0.0003% to 0.0050%, and Rem: 0.0003% to 0.0050%.

(4) The steel for machine structural use according to any one of (1) to (3) may include, as the chemical composition, by mass%, one or more selected from the group consisting of Ti: 0.005% to 0.20%, Nb: 0.005% to 0.20%, and V: 0.005% to 0.35%.

(5) The steel for machine structural use according to any one of (1) to (4) may include, as the chemical composition, by mass%, one or more selected from the group consisting of Sb: 0.0003% to 0.015%, Te: 0.0003% to 0.20%, and Pb: 0.01% to 0.50%.

(6) According to another aspect of the present invention, there is provided an induction-hardened steel component including, as a chemical composition, by mass%, C: 0.40% to 0.70%, Si: 0.15% to 3.00%, Mn: 0.30% to 2.00%, Cr: 0.01% or more and less than 0.50%, S: 0.003% to 0.070%, Bi: more than 0.0001% and 0.0050% or less, N: 0.0030% to 0.0075%, Al: 0.003% to 0.100%, P: 0.050% or less, B: 0% to 0.0050%, Mo: 0% to 0.20%, Ni: 0% to 1.00%, Cu: 0% to 1.00%, Ca: 0% to 0.0050%, Mg: 0% to 0.0050%, Zr: 0% to 0.0050%, Rem: 0% to 0.0050%, Ti: 0% to 0.20%, Nb: 0% to 0.20%, V: 0% to 0.35%, Sb: 0% to 0.015%, Te: 0% to 0.20%, Pb: 0% to 0.50%, and a remainder consisting of Fe and impurities, in which a following Expression (1b) and a following Expression (2b) are satisfied, and a presence density of MnS having an equivalent circle diameter of smaller than 2.0 $\mu$m is 300 pieces/mm$^2$ or more in a cross section parallel to a longitudinal direction.

$$290 \times C + 50 \times Si + 430 \geq 620 \ ... \ (1b)$$

$$d + 3\sigma < 20 \ ... \ (2b)$$

Here, C and Si in the Expression (1b) represent C and Si contents by mass%, d in the Expression (2b) represents an average equivalent circle diameter of the MnS in an unit of $\mu$m having the equivalent circle diameter of 1.0 $\mu$m or greater, and $\sigma$ in the Expression (2b) represents a standard deviation of the equivalent circle diameter of the MnS having the equivalent circle diameter of 1.0 $\mu$m or greater.

(7) The induction-hardened steel component according to (6) may include, as the chemical composition, by mass%, one or more selected from the group consisting of B: 0.0003% to 0.0050%, Mo: 0.01% to 0.20%, Ni: 0.05% to 1.00%, and Cu: 0.05% to 1.00%.

(8) The induction-hardened steel component according to (6) or (7) may include, as the chemical composition, by mass%, one or more selected from the group consisting of Ca: 0.0003% to 0.0050%, Mg: 0.0003% to 0.0050%, Zr: 0.0003% to 0.0050%, and Rem: 0.0003% to 0.0050%.

(9) The induction-hardened steel component according to any one of (6) to (8) may include, as the chemical composition, by mass%, one or more selected from the group consisting of Ti: 0.005% to 0.20%, Nb: 0.005% to 0.20%, and V: 0.005% to 0.35%.

(10) The induction-hardened steel component according to any one of (6) to (9) may include, as the chemical composition, by mass%, one or more selected from the group consisting of Sb: 0.0003% to 0.015%, Te: 0.0003% to 0.20%, and Pb: 0.01% to 0.50%.

[Effects of the Invention]

According to the aspect of the present invention, it is possible to provide the steel for machine structural use having excellent machinability and having excellent surface fatigue strength after induction hardening. In addition, it is possible to provide the induction-hardened steel component having excellent surface fatigue strength.

In the steel for machine structural use according to the aspect of the present invention, although the C content is 0.40% or more, the steel is suitable for a steel for induction hardening due to its excellent machinability at the time of performing machining before induction hardening. In addition, in the steel for machine structural use according to the aspect of the present invention, it is possible to reduce the percentage of machining cost in manufacturing costs of steel components such as gears, shafts, and pulleys for automobiles and industrial machinery, and it is possible to improve quality of the components.

[Brief Description of the Drawings]

FIG 1 is a graph showing a relationship between Vickers hardness at the depth of 50 $\mu$m from a surface of an induction-hardened steel component after being tempered at 300°C and the condition of ($290 \times C + 50 \times Si + 430$).
FIG 2 is a graph showing a relationship between a line in which the relational expression $290 \times C + 50 \times Si + 430 = 620$

is plotted and evaluations of surface fatigue strength of induction-hardened steel components.

[Embodiment of the Invention]

As described above, in steel components for machine structural use manufactured through a carburizing process, in order to ensure machinability, a steel having a low C content is used as a base forming material. Although the C content is low, since surface hardness of a steel increases through carburizing and hardening after being processed into a component shape, sufficient strength of the steel component can be acquired. On the other hand, in order for an induction-hardened steel component to acquire appropriate surface hardness (surface hardness equal to that of a steel component manufactured through carburizing), the C content in a steel is needed to be at least approximately 0.4% or more. In this case, hardness of the steel before cutting increases so that machinability deteriorates. That is, in order to obtain a steel for machine structural use having excellent machinability and having excellent surface fatigue strength after induction hardening through induction hardening, it is required that machinability does not deteriorate even though the steel is hardened due to the increased the C content.

In the related art, it has been known that a steel having excellent surface fatigue strength after carburizing can be obtained by adjusting the C content or the Si content. However, it has not been possible to have both surface fatigue strength and machinability, which are contrary to each other, being compatible at a high level. Therefore, the inventors have continuously conducted investigations and studies aiming at the development of a steel for machine structural use in which both surface fatigue strength and machinability can be compatible at a high level. As a result, the following knowledge has been achieved.

(a) If the Si content is high, surface fatigue strength of a steel (induction-hardened steel component) after induction hardening increases. In addition, as described below, when a minute amount of Bi is contained, the surface fatigue strength is further improved.

(b) Vickers hardness on a surface of a steel (induction-hardened steel component) after induction hardening has a correlationship with the C content and the Si content in the steel. In addition, when Vickers hardness on a surface of a steel component increases, surface fatigue strength is improved.

(c) When MnS is included in a steel, machinability is improved. Since MnS serving as an improving factor of machinability is precipitated due to crystallization among dendrite trees at the time of solidification and diffusion of Mn over precipitates, machinability (chip disposability and the life-span of tools) can be enhanced by finely dispersing MnS in a steel. In addition, in order for MnS to be finely dispersed, spacing among dendrite trees needs to be shortened. In the related art, studies on primary arm spacing of dendrite have been conducted and can be expressed by the following Expression (A).

$$\lambda \propto (D \times \sigma \times \Delta T)^{0.25} \dots (A)$$

Here, $\lambda$ is primary arm spacing ($\mu$m) of dendrite, D is a diffusion coefficient (m$^2$/s), $\sigma$ is solid-liquid interface energy (J/m$^2$), and $\Delta T$ is a solidification temperature range (°C).

From this Expression (A), it is found that the primary arm spacing $\lambda$ of dendrite depends on the solid-liquid interface energy $\sigma$ and $\lambda$ is reduced if this factor $\sigma$ can be reduced. If $\lambda$ can be reduced, the size of Mn sulfide crystallized among dendrite trees can be reduced. In addition, if sulfide like MnS is finely dispersed, surface fatigue strength after induction hardening is improved.

When a minute amount of Bi is contained, solid-liquid interface energy can be reduced. As a result, spacing among dendrite trees is reduced, so that MnS crystallized among dendrite trees can be refined.

Based on the knowledge described above, the inventors have found that in order to improve machinability and to increase surface fatigue strength after induction hardening, it is preferable to limit the relationship between the C content and the Si content, to contain a minute amount of Bi, and to cause a large amount of fine MnS to be precipitated.

Hereinafter, a steel for machine structural use and an induction-hardened steel component according to an embodiment of the present invention (a steel for machine structural use and an induction-hardened steel component according to the present embodiment) will be described.

In the present embodiment, a steel for machine structural use is a material to be subjected to induction hardening to obtain an induction-hardened steel component. In addition, an induction-hardened steel component indicates a component obtained by performing induction hardening with respect to a steel for machine structural use (however, tempering may be performed after induction hardening).

The induction-hardened steel component according to the present embodiment is obtained by performing induction hardening in which the maximum heating temperature ranges from 850°C to 1,100°C, with respect to the steel for machine structural use according to the present embodiment. For example, it is assumed that the induction-hardened steel component according to the present embodiment is used as a component requiring high surface fatigue strength, such as a gear used for power transmission in automobiles.

The steel for machine structural use and the induction-hardened steel component according to the present embodiment contains, as a chemical composition, by mass%, C: 0.40% to 0.70%, Si: 0.15% to 3.00%, Mn: 0.30% to 2.00%, Cr: 0.01% or more and less than 0.50%, S: 0.003% to 0.070%, Bi: more than 0.0001% and 0.0050% or less, N: 0.0030% to 0.0075%, Al: 0.003% to 0.100%, and P: 0.050% or less; and as necessary, includes B: 0.0050% or less, Mo: 0.20% or less, Ni: 1.00% or less, Cu: 1.00% or less, Ca: 0.0050% or less, Mg: 0.0050% or less, Zr: 0.0050% or less, Rem: 0.0050% or less, Ti: 0.20% or less, Nb: 0.20% or less, V: 0.35% or less, Sb: 0.015% or less, Te: 0.20% or less, Pb: 0.50% or less and a remainder consisting of Fe and impurities. In addition, the C content and the Si content satisfy the expression of $290 \times C + 50 \times Si + 430 \geq 620$.

In addition, in the steel for machine structural use and the induction-hardened steel component according to the present embodiment, a presence density of MnS having an equivalent circle diameter of smaller than 2.0 $\mu$m is 300 pieces/mm$^2$ or more in a cross section parallel to a longitudinal direction. When d is an average equivalent circle diameter of MnS having an equivalent circle diameter of 1.0 $\mu$m or greater, $\sigma$ is a standard deviation of the equivalent circle diameter of MnS having an equivalent circle diameter of 1.0 $\mu$m or greater, the expression $d + 3\sigma < 20$ is satisfied.

First, the reasons for limiting the amounts of the elements will be described. Hereinafter, the percentage sign "%" related to the content indicates "mass%".

<C: 0.40% to 0.70%>

C is an important element in acquiring strength of a steel. In addition, C is an element necessary for a structure before induction hardening to reduce the ferrite fraction (area ratio), to improve hardenability at the time of induction hardening, and to enlarge the depth of a hard layer. When the C content is less than 0.40%, the ferrite fraction increases in the structure before induction hardening, so that there are cases where hardenability at the time of induction hardening becomes insufficient. Thus, the C content is set to 0.40% or more, is preferably set to 0.45% or more, and is more preferably set to 0.50% or more. Meanwhile, when the C content is excessive, it leads to an increasing possibility that not only machinability or forgeability will be remarkably impaired but also a quenching crack will occur at the time of induction hardening. Therefore, the C content is set to 0.70% or less and is preferably set to 0.65% or less.

<Si: 0.15% to 3.00%>

Si is an element having an effect of improving surface fatigue strength after hardening by improving resistance to temper softening of a hardened layer. In order to achieve the effect, the Si content is set to 0.15% or more and is preferably set to 0.50% or more. Meanwhile, when the Si content exceeds 3.00%, decarbonizing at the time of forging becomes remarkable. Thus, the Si content is set to 3.00% or less.

<Mn: 0.30% to 2.00%>

Mn is solid-solubilized in a steel such that tensile strength and fatigue strength of the steel increase and hardenability of the steel increases. Furthermore, Mn combines with sulphur (S) in the steel and forms MnS such that machinability of the steel is enhanced. In order to achieve these effects, the Mn content is set to 0.30% or more. In a case of increasing tensile strength, fatigue strength, and hardenability of a steel before hardening, the Mn content is preferably set to 0.60% or more and is more preferably set to 0.75% or more. Meanwhile, if the Mn content is excessively high, machinability of a steel is degraded. Therefore, the Mn content is set to 2.00% or less. In a case of increasing cold forgeability of a steel, the Mn content is preferably set to 1.90% or less and is more preferably set to 1.70% or less.

<Cr: 0.01% or More and Less than 0.50%>

Cr increases tensile strength of a steel. In addition, Cr increases hardenability of a steel and increases surface hardness of a steel after induction hardening. In order to achieve these effects, the Cr content is set to 0.01% or more. In a case of increasing hardenability and tensile strength of a steel, the Cr content is preferably set to 0.03% or more and is more preferably set to 0.10% or more. Meanwhile, when the Cr content is excessive, machinability of a steel is degraded. Therefore, the Cr content is set less than 0.50%. In a case of further increasing fatigue strength, the Cr content is preferably set to 0.20% or less and is more preferably set to 0.10% or less.

<S: 0.003% to 0.070%>

S combines with Mn in a steel and forms MnS such that machinability of the steel is enhanced. In order to achieve this effect, the S content is set to 0.003% or more. In a case of enhancing machinability of a steel, the S content is preferably 0.010% or more and is more preferably set to 0.015% or more. Meanwhile, when S is excessively contained, fatigue strength of a steel is degraded. Furthermore, in a case of executing a magnetic powder flaw detection test with respect to a hot forged product after induction hardening, a false pattern is likely to be generated on a surface of the hot forged product. Therefore, the S content is set to 0.070% or less. The S content is preferably set to 0.050% or less and is more preferably set to 0.030% or less.

<Bi: More than 0.0001% and 0.0050% or Less>

Bi is an important element in the present embodiment. When a minute amount of Bi is contained, the solidification structure of a steel is refined. As a result, MnS is finely dispersed. In order to achieve the effect of refining MnS, the Bi content needs to be more than 0.0001%. In order to achieve the effect of finely dispersing MnS, the Bi content is preferably set to 0.0010% or more. Meanwhile, when the Bi content exceeds 0.0050%, not only the effect of refining a dendrite structure is saturated but also hot workability of a steel deteriorates, thereby resulting in difficulties with hot rolling. From these, the Bi content is set to 0.0050% or less.

<Al: 0.003% to 0.100%>

Al is an element effective in refining grains of an austenite structure at the time of induction hardening by being precipitated and dispersed in a steel as nitride. In addition, Al is an element enlarging the depth of a hard layer by enhancing hardenability. Moreover, Al is also an element effective in improving machinability. In order to achieve these effects, the Al content is set to 0.003% or more and is preferably set to 0.010% or more. Furthermore, Al is an element forming a compound with N at the time of nitriding, having an effect of increasing the N concentration in the surface layer area, and being also effective in improving surface fatigue strength. In this regard, the Al content is set to 0.003% or more. Meanwhile, when the Al content exceeds 0.100%, austenitic transformation is unlikely to be completed during induction heating, and hardenability is degraded, on the contrary. Therefore, the Al content is set to 0.100% or less.

<P: 0.050% or Less>

P is contained as impurities. Since P degrades toughness of a steel by being segregated on grain boundaries, P needs to be reduced as much as possible. The less P, the more preferable. When the P content exceeds 0.050%, toughness is remarkably degraded. Therefore, the P content is limited to 0.050% or less. The less the P content, the more preferable. However, since it is difficult to have 0% thereof, the lower limit for the P content may be set to 0.0001% that is the industrial limit.

<$290 \times C + 50 \times Si + 430 \geq 620$>

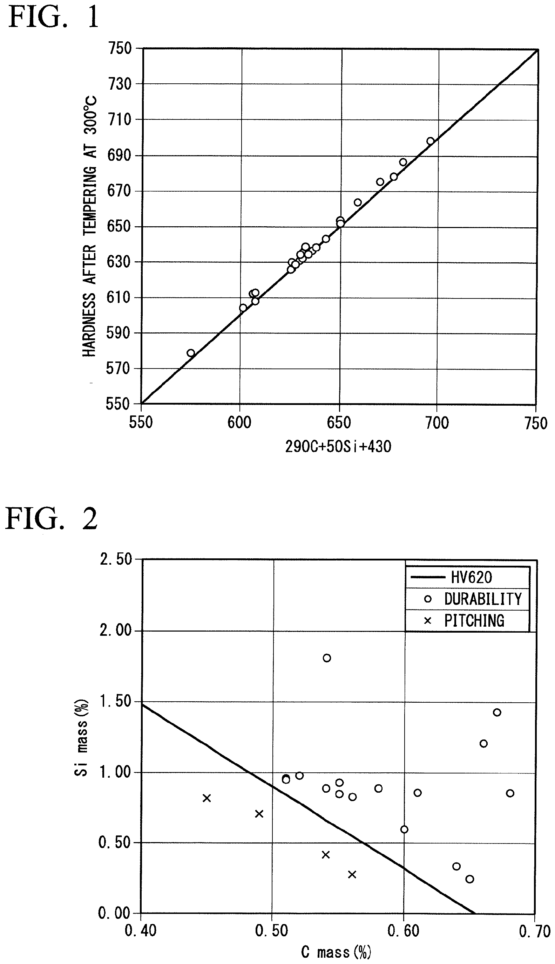

The inventors have investigated a relationship between Vickers hardness (Hv) at the depth of 50 $\mu$m from a surface of an induction-hardened steel component after being tempered at 300°C, and the C content and the Si content. As a result, as shown in FIG. 1, it is ascertained that the relationship can be arranged as $290 \times C + 50 \times Si + 430$. In addition, FIG. 2 shows a relationship between a line in which the relational expression $290 \times C + 50 \times Si + 430 = 620$ is plotted and evaluations of surface fatigue strength. As shown in FIG. 2, it has been found that components can be divided into quality products and defective products regarding surface fatigue strength, interposing a relational line therebetween. That is, as a result of intensive examination, the inventors have found that the value on the left side in the following Expression (1) substantially corresponds to Vickers hardness of a surface of an induction-hardened steel component tempered at 300°C. In addition, as a result of investigation on a relationship between surface fatigue strength in a roller pitching fatigue test and Vickers hardness after being tempered at 300°C, it is ascertained that in a case where Vickers hardness is 620 Hv or higher, the surface fatigue strength becomes equal to or higher than surface fatigue strength of a gas carburized gear in the related art. That is, when the value of $290 \times C + 50 \times Si + 430$ is 620 or greater, a component has sufficient surface fatigue strength after induction hardening. Meanwhile, when the value of $290 \times C + 50 \times Si + 430$ is less than 620, there is concern that surface fatigue strength is degraded and pitching occurs. Therefore, in the steel for machine structural use according to the present embodiment, in addition to the amounts of the elements, the C content and the Si content need to be controlled such that the following Expression (1) is satisfied.

$$290 \times C + 50 \times Si + 430 \geq 620 \quad (1)$$

Basically, the steel for machine structural use according to the present embodiment contains the chemical composition described above, and the remainder consists of Fe and impurities. However, as necessary, the steel for machine structural use according to the present embodiment may include one or more selected from the group consisting of B: 0% to 0.0050%, Mo: 0% to 0.20%, Ni: 0% to 1.00%, Cu: 0% to 1.00%, Ca: 0% to 0.0050%, Mg: 0% to 0.0050%, Zr: 0% to 0.0050%, Rem: 0% to 0.0050%, Ti: 0% to 0.20%, Nb: 0% to 0.20%, V: 0% to 0.35%, Sb: 0% to 0.015%, Te: 0% to 0.20%, and Pb: 0% to 0.50%. However, since these elements are not necessarily contained, their lower limits are 0%.

Here, impurities denote elements that are incorporated due to raw materials such as ores and scraps, or various environments of a manufacturing process when steel is industrially manufactured, and are allowed within a range in which no adverse influence is exerted on a steel.

<B: 0% to 0.0050%>

B combines with N in a steel and is precipitated as BN, thereby contributing to improvement of machinability. In addition, B is decomposed from BN at the time of heating in induction hardening and returns to B, thereby considerably improving hardenability. When hardenability at the time of induction hardening is improved, surface fatigue strength of a steel after induction hardening is improved. In a case where these effects are to be achieved, the B content is preferably set to 0.0003% or more. Meanwhile, when the B content exceeds 0.0050%, not only the effects are saturated, but also a crack is caused at the time of rolling or forging, on the contrary. Therefore, even in a case where B is contained, the B content is set to 0.0050% or less.

<Mo: 0% to 0.20%>

Mo has an effect of improving surface fatigue strength of a steel after induction hardening by improving resistance to temper softening of a hardened layer. In addition, Mo also has an effect of improving bending fatigue strength by making a hardened layer tough. In a case where these effects are to be achieved, the Mo content is preferably set to 0.01% or more and is more preferably set to 0.05% or more. Meanwhile, when the Mo content exceeds 0.20%, the effects are saturated and economic efficiency is impaired. Therefore, even in a case where Mo is contained, the Mo content is set to 0, 20% or less.

<Ni: 0% to 1.00%>

Ni is an element having an effect of improving a corrosion preventing function by being concentrated on a surface of a steel when being oxidized and suppressing the succeeding oxidation reaction. In order to reliably exhibit this effect, the Ni content is preferably set to 0.05% or more. Meanwhile, when the Ni content exceeds 1.00%, machinability deteriorates. Therefore, even in a case where Ni is to be contained, the Ni content is set to 1.00% or less.

<Cu: 0% to 1.00%>

Cu has an effect of improving a corrosion preventing function by being concentrated on a surface of a steel when being oxidized and suppressing the succeeding oxidation reaction. In order to reliably exhibit this effect, the Cu content is preferably set to 0.05% or more. Meanwhile, when the Cu content exceeds 1.00%, hot ductility is degraded, so that defects are likely to be formed at the time of rolling. Therefore, even in a case where Cu is to be contained, the Cu content is set to 1.00% or less.

<Ca: 0% to 0.0050%>

<Mg: 0% to 0.0050%>

<Te: 0% to 0.20%>

Ca, Mg, and Te are elements restraining MnS from being elongated at the time of rolling and further improving bending fatigue strength after induction hardening. In order to reliably achieve this effect, it is preferable that the Ca content is set to 0.0003% or more, the Mg content is set to 0.0003% or more, and the Te content is set to 0.0003% or more independently or in a combination. However, when there are excessive amounts of the elements, the effect is saturated and economic efficiency is impaired. Therefore, even in a case where Ca, Mg and/or Te are to be contained, the Ca content is set to 0.0050% or less, the Mg content is set to 0.0050% or less, and the Te content is set to 0.20% or less.

<Zr: 0% to 0.0050%>

Zr is an element having an effect of refining grains of an austenite structure at the time of induction hardening by being precipitated and dispersed in a steel as nitride. In a case where this effect is to be achieved, the Zr content is preferably set to 0.0003% or more. Meanwhile, when the Zr content exceeds 0.0050%, precipitates are coarsened and a steel becomes brittle. Therefore, even in a case where Zr is to be contained, the Zr content is set to 0.0050% or less.

<Rem: 0% to 0.0050%>

Rem (rare earth element) is an element restraining MnS from being elongated at the time of rolling and further improving bending fatigue strength. In order to reliably achieve this effect, the Rem content is preferably set to 0.0003% or more. However, when the amount of each element exceeds the limit, the effect is saturated, and composite oxide of oxide and sulfide is incited to be formed so that the size of inclusions is coarsened. Therefore, even in a case where Rem is to be contained, the Rem content is set to 0.0050% or less. Rem indicates lanthanoid elements such as La and Ce, and the Rem content indicates the total amount of these elements. When these elements are added, even if a misch metal having these elements mixed therein is used, there is no change in the effect.

<Ti: 0% to 0.20%>

Ti is an element having an effect of refining grains of an austenite structure at the time of induction hardening by being precipitated in a steel as nitride. In a case where this effect is to be achieved, the Ti content is preferably set to 0.005% or more. Meanwhile, when the Ti content exceeds 0.20%, precipitates are coarsened and a steel becomes brittle. Therefore, even in a case where Ti is to be contained, the Ti content is set to 0.20% or less.

<Nb: 0% to 0.20%>

Nb is an element having an effect of refining grains of an austenite structure at the time of induction hardening by being precipitated in a steel as nitride. In a case where this effect is to be achieved, the Nb content is preferably set to 0.005% or more. Meanwhile, when the Nb content exceeds 0.20%, the effect is saturated and economic efficiency is impaired. Therefore, even in a case where Nb is to be contained, the Nb content is set to 0.20% or less.

<V: 0% to 0.35%>

V is an element having an effect of refining grains of an austenite structure at the time of induction hardening by being dispersed and precipitated in a steel as nitride. In a case where this effect is to be achieved, the V content is preferably set to 0.005% or more. Meanwhile, when the V content exceeds 0.35%, the effect is saturated and economic efficiency is impaired. Therefore, even in a case where V is to be contained, the V content is set to 0.35% or less.

<Sb: 0% to 0.015%>

Sb is an element having a strong tendency of surface segregation and is an element effective in preventing a steel from being oxidized due to adsorbed oxygen from outside. In order to reliably exhibit this effect of preventing oxidation, the Sb content is preferably set to 0.0003% or more. Meanwhile, when the Sb content exceeds 0.015%, the effect is saturated. Therefore, in consideration of the efficiency, even in a case where Sb is to be contained, the Sb content is set to 0.015% or less.

<Pb: 0% to 0.50%>

Pb is an element enhancing machinability of a steel. Although the effect can be achieved even with a slight amount of Pb contained therein, the effect increases when the amount thereof is 0.01% or more. Therefore, in a case where the effect is to be achieved, the Pb content is preferably set to 0.01% or more. Meanwhile, if Pb is excessively contained, toughness and hot ductility of a steel are degraded. Therefore, even in a case where Pb is to be contained, the Pb content is set to 0.50% or less. A preferable Pb content is 0.25% or less.

Although induction hardening is performed with respect to the steel for machine structural use according to the present embodiment, the chemical composition does not change. Therefore, the chemical composition of the induction-hardened steel component according to the present embodiment is the same as the chemical composition of the steel for machine structural use according to the present embodiment.

Next, MnS included in a metallographic structure of the steel for machine structural use and the induction-hardened steel component according to the present embodiment will be described.

[300 Pieces/mm$^2$ or More of Presence Density (Number Density) of MnS Having Equivalent Circle Diameter Less than 2.0 $\mu$m]

Since MnS is useful for improving machinability, its number density needs to be ensured. However, when the S content is increased, although machinability is improved, coarse MnS increases. Coarse MnS degrades machinability and degrades surface fatigue strength of a steel after induction hardening. Therefore, in order to improve machinability, not only the number density of MnS but also the size thereof needs to be controlled. Specifically, when MnS having an equivalent circle diameter of smaller than 2.0 $\mu$m is present in a steel by the presence density (number density) of 300 pieces/mm$^2$ or more, abrasion of a tool is suppressed. When the amount of MnS having an equivalent circle diameter of smaller than 2.0 $\mu$m increases, machinability is improved. Therefore, there is no need to regulate the upper limit for the presence density.

The equivalent circle diameter of MnS is a diameter of a circle having an area equal to the area of the MnS and can be obtained through an image analysis. Similarly, the number density of MnS can be obtained through an image analysis. Specifically, a cross section parallel to the longitudinal direction of a hot forging steel is photo-captured at a magnification of 100-fold using an optical microscope, and as many images of an inspection reference area (region) of 0.9 mm$^2$ are prepared as ten visions. Among pieces of MnS in the observation visions (images), ten pieces are selected in descending order of size, and the equivalent circle diameter of each piece of the selected MnS is calculated. Then, the equivalent circle diameter can be obtained by converting the dimension (diameter) into an equivalent circle diameter indicating the diameter of a circle having the same area as the area of precipitates. In addition, the number density is obtained by dividing the number of pieces of MnS by the observation vision area. MnS as inclusions may be confirmed using an energy dispersive X-ray spectroscopic analysis apparatus (EDS) which belongs to an electronic scanning microscope. Realistically, in order to statistically handle the size and the composition of particles using a general-purpose instrument, it is preferable that the equivalent circle diameter of MnS as an observation target is 1.0 $\mu$m or greater.

[In Regard to Expression (2)]

As described above, surface fatigue strength of a steel after induction hardening is improved by reducing the primary arm spacing of dendrite and refining sulfide crystallized from among dendrite trees. More specifically, if MnS of 20 $\mu$m or greater at the maximum circle equivalent diameter is removed, machinability is improved.

The inventors have defined the value as F1 in Expression (2), in which unevenness of the equivalent circle diameter of sulfide detected per 9 mm$^2$ in the observation vision is the standard deviation $\sigma$ and the average equivalent circle diameter d is added to a value three times the standard deviation (3$\sigma$).

$$F1 = d + 3\sigma \qquad (2)$$

Here, d in Expression (2) indicates the average equivalent circle diameter ($\mu$m) of MnS having an equivalent circle diameter of 1.0 $\mu$m or greater, and $\sigma$ indicates the standard deviation of the equivalent circle diameter of MnS having an equivalent circle diameter of 1.0 $\mu$m or greater. In addition, the value F1 indicates the maximum circle equivalent diameter in 99.7% of pieces of sulfide among the pieces of sulfide which are present in the steel for machine structural use or the induction-hardened steel component according to the present embodiment and can be observed using an optical microscope. The maximum circle equivalent diameter is estimated from the equivalent circle diameter of sulfide observed within the range of the observation vision by 9 mm$^2$ and the standard deviation of the equivalent circle diameter. That is, if the value F1 is less than 20 ($\mu$m), it indicates that little sulfide of 20 $\mu$m or greater at the maximum circle equivalent diameter is present. Such a steel has high machinability and has excellent surface fatigue strength after induction hardening. The equivalent circle diameter of MnS is a diameter of a circle having an area equal to the area of the MnS and can be obtained through an image analysis as described above. The equivalent circle diameter of MnS as an observation target is set to 1.0 $\mu$m or greater because the equivalent circle diameter of 1.0 $\mu$m or greater is a realistic range in which the size and the composition of particles can be statistically handled using a general-purpose instrument, and because surface fatigue strength and chip disposability are less affected even when sulfide which is smaller than that is controlled.

[Dendrite Structure]

In a continuously cast slab used for manufacturing the steel for machine structural use according to the present embodiment, its solidification structure exhibits a form of dendrite. MnS in a steel for machine structural use is often crystallized before being solidified (in a molten steel) or at the time of solidification and is considerably affected by the primary arm spacing of dendrite. That is, if the primary arm spacing of dendrite is small, MnS crystallized among trees becomes small. In the steel for machine structural use according to the present embodiment, it is desirable that the primary arm spacing of dendrite in the stage of a slab is smaller than 600 $\mu$m. MnS crystallized from the primary arms of dendrite is refined and the maximum circle equivalent diameter of MnS becomes smaller than 20 $\mu$m by refining the dendrite structure.

In order to refine the dendrite structure, it is effective to contain a minute amount of Bi and to reduce solid-liquid interface energy in a molten steel.

The induction-hardened steel component according to the present embodiment is obtained by performing induction hardening with respect to the steel for machine structural use according to the present embodiment.

In addition, the induction-hardened steel component according to the present embodiment does not have an uneven layer having an abnormal surface layer including retained $\gamma$, nitride, or intergranular oxidation, so that the layer having an abnormal surface layer is restrained to the minimum from being formed. In addition, the induction-hardened steel component according to the present embodiment has hardness of 720 Hv or higher by Vickers hardness at a position in the depth of 50 $\mu$m from a surface even after tempering is performed at 300°C.

[Manufacturing Method]

Next, a preferable method of manufacturing the steel for machine structural use and the induction-hardened steel component according to the present embodiment will be described.

The method of manufacturing the steel for machine structural use according to the present embodiment has the chemical composition described above and includes a process of casting a slab in which primary arm spacing of dendrite within a range of 15 mm from a surface layer is smaller than 600 $\mu$m and a process of hot working for this slab. Here, hot working may include hot rolling.

[Casting Process]

A slab of steel satisfying the chemical composition and Expression (1) described above is manufactured through a continuous casting method. An ingot (steel ingot) may be formed through an ingot-making method. Examples of casting conditions can include a condition in which super-heating for a molten steel inside a tundish ranges from 10°C to 50°C and the casting speed is set to range from 1.0 m/min to 1.5 m/min, using a mold of 220 mm $\times$ 220 mm square.

Furthermore, in order to cause the primary arm spacing of dendrite described above to be smaller than 600 $\mu$m, it is desirable that when a molten steel having the chemical composition described above is cast, the average cooling rate within a temperature range from the liquidus temperature to the solidus temperature in the depth of 15 mm from a slab surface ranges from 100 °C/min to 500 °C/min. When the average cooling rate is slower than 100 °C/min, it is difficult to cause the primary arm spacing of dendrite at a position in the depth of 15 mm from a slab surface to be smaller than 600 $\mu$m, and there is concern that MnS cannot be finely dispersed. Meanwhile, when the average cooling rate exceeds 500 °C/min, MnS crystallized from among dendrite trees is excessively refined, and there is concern that machinability is degraded.

In addition, in order to reduce center segregation, reduction may be added in a stage in the middle of solidification of continuous casting.

The temperature range from the liquidus temperature to the solidus temperature indicates a temperature range from a start of solidification to an end of solidification. Therefore, the average cooling rate in this temperature range denotes the average solidification rate of a slab. The average cooling rate can be achieved by means of a technique, for example, controlling the cross-sectional size of the mold, the casting speed, and the like to proper values, or increasing the quantity of cooling water used for water cooling immediately after casting. This can apply to both the continuous casting method and the ingot-making method.

The cooling rate at a position in the depth of 15 mm from a slab surface is obtained by etching a cross section of the obtained slab with picric acid, measuring 100 spots of secondary arm spacing $\lambda_2$ ($\mu$m) of dendrite at a pitch of 5 mm in a casting direction with respect to each of the positions in the depth of 15 mm from a slab surface, and having the arithmetical mean of a cooling rate A (°C/sec) within the temperature range from the liquidus temperature to the solidus temperature of a slab calculated from the values based on the following Expression (3).

$$\lambda_2 = 710 \times A\text{-}0.39 \quad (3)$$

Therefore, for example, an optimal casting condition can be determined from obtained cooling rates by manufacturing a plurality of slabs under various casting conditions and obtaining the cooling rate of each slab by Expression (3).

[Hot Working Process]

Subsequently, a billet (steel piece) is manufactured by performing hot working such as blooming with respect to a slab or an ingot obtained through the casting process. Furthermore, the billet is subjected to hot rolling, thereby obtaining a steel bar or a wire rod which is the steel for machine structural use according to the present embodiment. There is no particular limit to the rolling reduction for hot working.

For example, after a billet is heated at a heating temperature ranging from 1,250°C to 1,300°C for 1.5 hours or longer, hot rolling is performed at a finishing temperature ranging from 900°C to 1,100°C. After finish rolling is performed, the billet is cooled in the atmosphere under a condition in which the cooling rate meets that of air cooling or slower. In order to enhance productivity, cooling may be performed by means of a suitable technique such as air cooling, mist cooling, and water cooling at the point of time the temperature reaches 600°C. The heating temperature and the heating time respectively denote the average temperature inside a furnace and the in-furnace time. In addition, the finishing temperature of hot rolling denotes the surface temperature of a bar or a wire at a finish stand outlet in a mill having a plurality of stands. The cooling rate after finish rolling is performed indicates the cooling rate on a surface of a bar or a wire (steel bar or wire rod).

As described above, it is possible to obtain the steel for machine structural use according to the present embodiment.

Furthermore, a manufactured steel bar or wire rod (steel for machine structural use) is subjected to hot forging, and then an intermediate product having a rough shape is manufactured. Quench and temper treatment may be executed with respect to the intermediate product. Furthermore, the intermediate product is subjected to machining such that the intermediate product is formed into a predetermined shape. For example, machining is cutting or piercing.

Next, induction hardening is executed with respect to the intermediate product, and the surface of the intermediate product is hardened. Accordingly, a surface hardening layer is formed on a surface of the intermediate product. Then, finishing is executed with respect to the intermediate product which has been subjected to induction hardening. Finishing is grinding or polishing.

In the process of performing induction hardening, the hardening temperature (maximum heating temperature) is set to range from 850°C to 1,100°C, and cooling is performed from this temperature range to a temperature near a normal temperature, for example, to 25°C or lower. When the hardening temperature is less than 850°C, sufficient hardening cannot be executed with respect to a base forming material through induction hardening, so that pro-eutectoid ferrite appears. When pro-eutectoid ferrite is present, hardness of the surface hardening layer becomes inhomogeneous, so that surface fatigue strength is not improved. In addition, when the hardening temperature is less than 850°C, the surface layer area is not sufficiently transformed into austenite, so that the desired hardened layer depth cannot be obtained. Meanwhile, in a case where the hardening temperature exceeds 1,100°C, the surface layer area is remarkably oxidized, so that smooth surface properties cannot be sufficiently ensured. In this case, surface fatigue strength is also degraded. In addition, in order to sufficiently transform the surface layer into austenite, it is preferable that the time for the temperature to be 850°C or higher ranges from 0.5 seconds to 1 minute.

The induction-hardened steel component according to the present embodiment is manufactured through the processes described above. The induction-hardened steel component according to the present embodiment has the same chemical composition as that of the steel for machine structural use. The presence density of MnS having an equivalent circle diameter of smaller than 2.0 $\mu$m is 300 pieces/mm$^2$ or more, and the condition of d+3$\sigma$<20 $\mu$m is satisfied. In addition, a surface hardening layer is provided.

As described above, in the steel for machine structural use (steel bar in the example described above) which becomes a material for the induction-hardened steel component, the maximum circle equivalent diameter of MnS needs to be smaller than 20 $\mu$m. When the material (steel bar) is forged, MnS in the steel is refined in accordance with the forging ratio. However, many induction-hardened steel components have a complicated shape, so that the forging ratio is not uniform throughout the entire material. Therefore, a rarely forged part, that is, a part having an extremely small forging ratio takes place in the forged material. Even in such a part, in order to enhance machinability, the maximum circle equivalent diameter of MnS in the steel for machine structural use which will become a material needs to be smaller than 20 $\mu$m. In the steel for machine structural use according to the present embodiment, machinability can be improved and surface fatigue strength can be improved without depending on the working amount during hot working.

As described above, the steel for machine structural use according to the present embodiment has excellent machinability, and has excellent surface fatigue strength in a case of being manufactured into an induction-hardened steel component.

[Examples]

Hereinafter, the present invention will be specifically described with reference to Example. The condition in Example is First Condition Example employed to confirm the feasibility and the effect of the present invention, and the present invention is not limited to only First Condition Example. The present invention can employ various conditions as long as the object of the present invention is achieved without departing from the gist of the present invention.

The steel No. a to ii each having the chemical composition indicated in Tables 1 and 2 were formed into ingots in a 270-ton converter, and slabs of 220 mm × 220 mm square were manufactured by executing continuous casting using a continuous casting machine. Reduction was added in a stage in the middle of solidification of continuous casting. In continuous casting of the slabs, the average cooling rate within a temperature range from the liquidus temperature to the solidus temperature at a position in the depth of 15 mm from the slab surface was varied by varying the quantity of cooling water in a mold.

Subsequently, the manufactured slabs were inserted into a heating furnace and were heated at a heating temperature ranging from 1,250°C to 1,300°C for 10 hours or longer. Thereafter, blooming was performed, and billets were obtained.

Subsequently, the billets were heated at a heating temperature ranging from 1,250°C to 1,300°C for 1.5 hours or longer. Thereafter, hot rolling was performed at a finishing temperature ranging from 900°C to 1,100°C, and round bars having a diameter of 40 mm were obtained. In this manner, steels of Test Nos. 1 to 31 for machine structural use were manufactured.

[Observation of Solidification Structure]

The solidification structures of the slabs used for manufacturing the steels for machine structural use were observed. Specifically, a cross section of each slab was etched with picric acid, and 100 spots of the primary arm spacing of dendrite were measured at a pitch of 5 mm in the casting direction at a position of 15 mm in the depth direction from the slab surface. Then, the average value thereof was obtained.

[Microstructure Test]

The microstructure of the round bar (steel for machine structural use) of each Test No. was observed. After the round bar was cut perpendicularly to the axial direction (longitudinal direction), a D/4 position (D: diameter) was cut parallel to the axial direction, thereby obtaining a test piece for observing the microstructure. The test surface was a cross section parallel to the longitudinal direction in rolling.

Specifically, the cut surface of the test piece was polished, and ten polished test pieces having a height of 10 mm and a width of 10 mm were prepared. Predetermined positions of these polished test pieces were photo-captured at a magnification of 100-fold using an optical microscope, and as many images of an inspection reference area (region) of 0.9 mm$^2$ were prepared as ten visions. Among pieces of MnS in the observation visions (images), ten pieces were selected in descending order of size, and the equivalent circle diameter of each piece of the selected MnS was calculated. The dimension (diameter) was converted into an equivalent circle diameter indicating the diameter of a circle having the same area as the area of precipitates. In addition, from the grain size distribution of the detected MnS, the average equivalent circle diameter and the standard deviation of sulfide were calculated.

As discrimination of MnS, the metallographic structure of a steel was observed using an optical microscope, and MnS was discriminated based on the contrast in the structure. However, for the confirmation, some MnS was identified using an electronic scanning microscope and an energy dispersive X-ray spectroscopic analysis apparatus (EDS).

[Machinability and Surface Fatigue Strength Evaluation Test]

Next, the life-span of a drill was investigated as machinability using the round bar (steel for machine structural use) of each Test No..

In addition, the roller pitching fatigue test for evaluating surface fatigue strength was performed.

<Drill Life-span Test>

In order to evaluate the life-span of the drill, a round bar of ϕ 40 mm was machined from the center into a machinability evaluating test piece having a diameter of 38 mm and a height of 21 mm, thereby being subjected to a drill test. As the tool, a drill (model number SD3.0, manufactured by NACHI-FUJIKOSHI CORP.) was used. A drill piercing test in which the feed rate was 0.25 mm per rotation, the piercing depth of one hole was 9 mm, and lubrication was performed using water-soluble cutting oil was performed, and machinability of each steel was evaluated. As an evaluation index, a maximum cutting speed VL1000 was employed such that cutting can be performed to the cumulative hole depth of 1,000 mm. The maximum cutting speed VL1000 of 40 m/min or faster was evaluated as satisfactory, and the maximum cutting speed VL1000 less than 40 m/min was evaluated as poor.

<Roller Pitching Fatigue Test>

For the roller pitching fatigue test, the round bar of φ40 mm after heat treatment was machined from the center into a small roller test piece having a cylindrical portion of a diameter of 26 mm and a width of 28 mm. The small roller test piece gathered in the manner described above was subjected to induction hardening under the condition in Table 3. Thereafter, tempering was performed at 150°C for an hour, and surface fatigue strength was evaluated through the roller pitching test.

Specifically, using the prepared small roller test pieces and separately prepared large roller test pieces (SCM722 subjected to surface grinding after carburizing), the roller pitching fatigue test, that is, a standard surface fatigue strength test, was performed. The roller pitching fatigue test was performing by pressing the large roller test piece to the small roller test piece at various kinds of surface pressure of Hertzian stress and rotating both the roller test pieces while causing the circumferential speed direction of both the roller test pieces in the contact portion to be the same direction and having the slip factor of -40% (the circumferential speed of the large roller test piece was faster than that of the small roller test piece in the contact portion by 40%). The oil temperature of ATF (AT lubricating oil) supplied to the contact portion as lubricating oil was set to 80°C, and contact stress between the large roller test piece and the small roller test piece was set to 3,000 MPa. The number of times of test stop was set to ten million times ($10^7$ times). In a case where the number of rotation reached ten million times without having occurrence of pitching in the small roller test, it was determined that surface fatigue strength was sufficiently high and durability (roller pitching fatigue durability) of the small roller test piece was sufficiently ensured. The occurrence of pitching was detected using a vibration meter provided in a tester, and occurrence of pitching damage and the number of rotation were checked by stopping rotation of both the rollers after detection of vibration.

As indicated in Tables 1 to 3, it was found that Example of the invention was excellent in both machinability and surface fatigue strength after induction hardening. Meanwhile, in Comparative Example, since the chemical composition of the present invention was not satisfied and/or the presence state of MnS does not satisfy the range in the present invention, machinability or surface fatigue strength after induction hardening or combination thereof was not satisfied consequently.

In Test Nos. 18 and 19, Bi was not contained. In addition, the number density of MnS of smaller than 2.0 μm was low, and the value of d+3σ was 20 or greater. As a result, machinability was not sufficient.

In Test No. 20, the C content was small. In addition, the value of 290×C+50×Si+430 was less than 620. As a result, surface fatigue strength was not sufficient.

In Test No. 21, the Cr content exceeded the upper limit. Therefore, uneven hardening occurred in the structure after induction hardening, and sufficient surface fatigue strength could not be acquired.

In Test Nos. 22 to 25, the value of 290×C+50×Si+430 was less than 620. As a result, surface fatigue strength was not sufficient.

In Test No. 26, the S content was small. Therefore, sufficient MnS could not be ensured and sufficient machinability could not be achieved.

In Test No. 27, the S content was excessive. Therefore, surface fatigue fracture occurred having MnS as a starting point, and surface fatigue strength was not sufficient.

In Test No. 28, the Mn content was small. Therefore, sufficient MnS could not be ensured and sufficient machinability could not be achieved. Furthermore, in Test No. 28, surface fatigue strength was not sufficient. The reason is estimated that since S was not sufficiently fixed, FeS degrading hot ductility was formed and fatigue fracture occurred in an early stage while having a crack seemed to occur inside the test piece, as a starting point.

In Test No. 29, the Mn content was excessive. Therefore, strength before induction hardening became excessively high and sufficient machinability could not be obtained.

In Test No. 30, due to the slow cooling rate at the time of casting, the number density of MnS of smaller than 2.0 μm was low, and the value of d+3σ was 20 or greater. Therefore, sufficient machinability could not be obtained.

In Test No. 31, the C content was small. As a result, surface fatigue strength was not sufficient.

[Table 1]

| Kind of steel | Chemical composition (mass%) *Remainder: Fe and impurities | | | | | | | | | |
|---|---|---|---|---|---|---|---|---|---|---|
| No. | C | Si | Mn | P | S | Bi | Al | Cr | O | N |
| a | 0.55 | 0.85 | 0.70 | 0.013 | 0.015 | 0.0041 | 0.023 | 0.10 | 0.0011 | 0.0038 |
| b | 0.51 | 0.96 | 0.65 | 0.014 | 0.015 | 0.0035 | 0.025 | 0.10 | 0.0017 | 0.0038 |
| c | 0.66 | 1.21 | 0.43 | 0.013 | 0.014 | 0.0038 | 0.027 | 0.20 | 0.0018 | 0.0045 |
| d | 0.54 | 1.81 | 1.35 | 0.016 | 0.011 | 0.0035 | 0.021 | 0.24 | 0.0015 | 0.0047 |

(continued)

| Kind of steel | Chemical composition (mass%) *Remainder: Fe and impurities | | | | | | | | | |
|---|---|---|---|---|---|---|---|---|---|---|
| No. | C | Si | Mn | P | S | Bi | Al | Cr | O | N |
| e | 0.67 | 1.43 | 0.95 | 0.014 | 0.012 | 0.0046 | 0.026 | 0.10 | 0.0014 | 0.0048 |
| f | 0.52 | 0.98 | 1.00 | 0.013 | 0.047 | 0.0048 | 0.024 | 0.11 | 0.0016 | 0.0047 |
| g | 0.56 | 0.83 | 0.75 | 0.011 | 0.017 | 0.0029 | 0.027 | 0.32 | 0.0015 | 0.0048 |
| h | 0.51 | 0.96 | 1.11 | 0.012 | 0.012 | 0.0018 | 0.050 | 0.41 | 0.0015 | 0.0043 |
| i | 0.55 | 0.93 | 1.23 | 0.017 | 0.015 | 0.0041 | 0.091 | 0.12 | 0.0017 | 0.0047 |
| j | 0.58 | 0.89 | 0.80 | 0.013 | 0.011 | 0.0045 | 0.042 | 0.12 | 0.0017 | 0.0043 |
| k | 0.51 | 0.95 | 0.79 | 0.011 | 0.015 | 0.0041 | 0.022 | 0.12 | 0.0021 | 0.0056 |
| l | 0.61 | 0.86 | 0.84 | 0.009 | 0.035 | 0.0047 | 0.019 | 0.12 | 0.0017 | 0.0049 |
| m | 0.68 | 0.86 | 0.52 | 0.008 | 0.023 | 0.0041 | 0.018 | 0.12 | 0.0024 | 0.0048 |
| n | 0.54 | 0.89 | 0.42 | 0.017 | 0.019 | 0.0049 | 0.037 | 0.12 | 0.0017 | 0.0043 |
| o | 0.65 | 0.25 | 0.43 | 0.012 | 0.023 | 0.0041 | 0.023 | 0.10 | 0.0015 | 0.0041 |
| p | 0.64 | 0.34 | 0.51 | 0.013 | 0.015 | 0.0042 | 0.022 | 0.11 | 0.0013 | 0.0039 |
| q | 0.60 | 0.60 | 0.49 | 0.012 | 0.016 | 0.0047 | 0.026 | 0.11 | 0.0012 | 0.0038 |
| t | 0.56 | 0.91 | 0.75 | 0.015 | 0.013 | - | 0.027 | 0.11 | 0.0014 | 0.0041 |
| u | 0.53 | 0.88 | 0.64 | 0.017 | 0.015 | - | 0.028 | 0.12 | 0.0014 | 0.0057 |
| x | 0.35 | 0.87 | 0.75 | 0.008 | 0.015 | 0.0032 | 0.027 | 0.12 | 0.0018 | 0.0039 |
| y | 0.55 | 1.21 | 0.64 | 0.027 | 0.011 | 0.0042 | 0.045 | 1.20 | 0.0024 | 0.0051 |
| z | 0.56 | 0.28 | 0.59 | 0.016 | 0.016 | 0.0047 | 0.036 | 0.11 | 0.0021 | 0.0052 |
| aa | 0.54 | 0.42 | 0.88 | 0.014 | 0.017 | 0.0048 | 0.019 | 0.10 | 0.0019 | 0.0048 |
| bb | 0.45 | 0.82 | 0.62 | 0.015 | 0.012 | 0.0041 | 0.025 | 0.11 | 0.0017 | 0.0049 |
| cc | 0.49 | 0.71 | 0.59 | 0.016 | 0.019 | 0.0042 | 0.021 | 0.10 | 0.0015 | 0.0041 |
| dd | 0.57 | 0.81 | 0.81 | 0.014 | 0.001 | 0.0041 | 0.023 | 0.10 | 0.0016 | 0.0042 |
| ee | 0.58 | 0.75 | 0.75 | 0.015 | 0.120 | 0.0032 | 0.024 | 0.10 | 0.0015 | 0.0048 |
| ff | 0.61 | 0.69 | 0.10 | 0.032 | 0.015 | 0.0025 | 0.025 | 0.12 | 0.0015 | 0.0051 |
| gg | 0.55 | 0.74 | 3.13 | 0.013 | 0.016 | 0.0029 | 0.026 | 0.11 | 0.0014 | 0.0044 |
| hh | 0.57 | 0.65 | 0.72 | 0.015 | 0.014 | 0.0024 | 0.027 | 0.11 | 0.0013 | 0.0043 |
| ii | 0.30 | 2.52 | 0.74 | 0.015 | 0.015 | 0.0028 | 0.023 | 0.10 | 0.0015 | 0.0045 |

[Table 2]

| Kind of steel | Chemical composition (mass%) | | | | | | | | | | | | | | |
|---|---|---|---|---|---|---|---|---|---|---|---|---|---|---|---|
| No. | B | Mo | Ni | Cu | Ca | Mg | Zr | REM | Ti | Nb | V | Sb | Te | Pb | 290×C+50×Si+430 |
| a | 0.0019 | | | | | | | | 0.03 | | | | | | 632 |
| b | | | | | | | | | | | | | | | 626 |
| c | | | | | | | | | | | | | | | 682 |
| d | 0.0019 | | | | | | | | 0.04 | | | | | | 677 |
| e | 0.0022 | | | | | | | | 0.05 | | | | | | 696 |
| f | | | | | | | | | | | | | | | 630 |
| g | | | | | | | | | | | | | | | 634 |
| h | | | | | | | | | | | | | 0.02 | 0.08 | 626 |
| i | | | | | | | | | | | | 0.004 | | | 636 |
| j | | | | | | | | 0.0018 | | 0.02 | 0.05 | | | | 643 |
| k | | | | | | | 0.0021 | | | | | | | | 625 |
| l | | | | | 0.0015 | 0.0018 | | | | | | | | | 650 |
| m | | | 0.40 | 0.20 | | | | | | | | | | | 670 |
| n | | 0.15 | | | | | | | | | | | | | 631 |
| o | | | | | | | | | | | | | | | 631 |
| p | | | | | | | | | | | | | | | 633 |
| q | | | | | | | | | | | | | | | 634 |
| t | | | | | | | | | | | | | | | 638 |
| u | | | | | | | | | | | | | | | 628 |
| x | | | | | | | | | | | | | | | 575 |
| y | | | | | | | | | | | | | | | 650 |
| z | | | | | | | | | | | | | | | 606 |
| aa | | | | | | | | | | | | | | | 608 |
| bb | | | | | | | | | | | | | | | 602 |

EP 3 366 800 B1

(continued)

| Kind of steel | Chemical composition (mass%) | | | | | | | | | | | | | | | | | |
|---|---|---|---|---|---|---|---|---|---|---|---|---|---|---|---|---|---|---|
| No. | B | Mo | Ni | Cu | Ca | Mg | Zr | REM | Ti | Nb | V | Sb | Te | Pb | 290×C+50×Si+430 |
| cc | | | | | | | | | | | | | | | 608 |
| dd | | | | | | | | | | | | | | | 636 |
| ee | | | | | | | | | | | | | | | 636 |
| ff | | | | | | | | | | | | | | | 641 |
| gg | | | | | | | | | | | | | | | 627 |
| hh | | | | | | | | | | | | | | | 628 |
| ii | | | | | | | | | | | | | | | 643 |

[Table 3]

| Test No. | Steel No. | classification | 15 mm depth cooling rate (°C/min) | Induction hardening conditions | | Structure | | | Machinability evaluation | Surface fatigue strength evaluation |
| | | | | Hardening temperature (°C) | Heating time (s) | Primary arm spacing of dendrite ($\mu$m) | Number density of MnS of smaller than 2.0 $\mu$m (pieces/mm$^2$) | d+3$\sigma$ ($\mu$m) | Drill life-span test (-) | Roller pitching fatigue test 10$^7$ times of durability (stress: 3,000 MPa) |
|---|---|---|---|---|---|---|---|---|---|---|
| 1 | a | Example of Invention | 150 | 1,000 | 10 | 551 | 369 | 11 | Satisfactory | Durable |
| 2 | b | Example of Invention | 190 | 1,000 | 10 | 441 | 331 | 9 | Satisfactory | Durable |
| 3 | c | Example of Invention | 200 | 1,000 | 10 | 424 | 386 | 9 | Satisfactory | Durable |
| 4 | d | Example of Invention | 140 | 1,000 | 10 | 516 | 406 | 9 | Satisfactory | Durable |
| 5 | e | Example of Invention | 130 | 1,000 | 10 | 541 | 405 | 11 | Satisfactory | Durable |
| 6 | f | Example of Invention | 170 | 1,000 | 10 | 429 | 465 | 15 | Satisfactory | Durable |
| 7 | g | Example of Invention | 180 | 1,000 | 10 | 433 | 349 | 12 | Satisfactory | Durable |
| 8 | h | Example of Invention | 130 | 1,000 | 10 | 586 | 330 | 10 | Satisfactory | Durable |
| 9 | i | Example of Invention | 200 | 1,000 | 10 | 427 | 423 | 12 | Satisfactory | Durable |
| 10 | j | Example of Invention | 170 | 1,000 | 10 | 476 | 304 | 11 | Satisfactory | Durable |
| 11 | k | Example of Invention | 140 | 1,000 | 10 | 583 | 397 | 9 | Satisfactory | Durable |
| 12 | l | Example of Invention | 150 | 1,000 | 10 | 564 | 339 | 11 | Satisfactory | Durable |

(continued)

| Test No. | Steel No. | classification | 15 mm depth cooling rate (°C/min) | Induction hardening conditions | | Structure | | | Machinability evaluation | Surface fatigue strength evaluation |
|---|---|---|---|---|---|---|---|---|---|---|
| | | | | Hardening temperature (°C) | Heating time (s) | Primary arm spacing of dendrite (μm) | Number density of MnS of smaller than 2.0 μm (pieces/mm²) | d+3σ (μm) | Drill life-span test (-) | Roller pitching fatigue test $10^7$ times of durability (stress: 3,000 MPa) |
| 13 | m | Example of Invention | 130 | 1,000 | 10 | 530 | 349 | 10 | Satisfactory | Durable |
| 14 | n | Example of Invention | 120 | 1,000 | 10 | 585 | 378 | 10 | Satisfactory | Durable |
| 15 | o | Example of Invention | 220 | 1,000 | 10 | 420 | 407 | 12 | Satisfactory | Durable |
| 16 | p | Example of Invention | 140 | 1,000 | 10 | 492 | 384 | 11 | Satisfactory | Durable |
| 17 | q | Example of Invention | 180 | 1,000 | 10 | 464 | 376 | 10 | Satisfactory | Durable |
| 18 | t | Comparative Example | 170 | 1,000 | 10 | 623 | 202 | 23 | Poor | Durable |
| 19 | u | Comparative Example | 150 | 1,000 | 10 | 648 | 195 | 25 | Poor | Durable |
| 20 | x | Comparative Example | 130 | 1,000 | 10 | 591 | 326 | 11 | Satisfactory | Occurrence of pitching damage |
| 21 | y | Comparative Example | 140 | 1,000 | 10 | 579 | 333 | 10 | Satisfactory | Occurrence of pitching damage |
| 22 | z | Comparative Example | 180 | 1,000 | 10 | 450 | 384 | 10 | Satisfactory | Occurrence of pitching damage |
| 23 | aa | Comparative Example | 170 | 1,000 | 10 | 476 | 327 | 12 | Satisfactory | Occurrence of pitching damage |
| 24 | bb | Comparative Example | 130 | 1,000 | 10 | 519 | 340 | 10 | Satisfactory | Occurrence of pitching damage |

(continued)

| Test No. | Steel No. | classification | 15 mm depth cooling rate (°C/min) | Induction hardening conditions | | Structure | | | Machinability evaluation | Surface fatigue strength evaluation |
| | | | | Hardening temperature (°C) | Heating time (s) | Primary arm spacing of dendrite ($\mu$m) | Number density of MnS of smaller than 2.0 $\mu$m (pieces/mm$^2$) | d+3$\sigma$ ($\mu$m) | Drill life-span test (-) | Roller pitching fatigue test $10^7$ times of durability (stress: 3,000 MPa) |
|---|---|---|---|---|---|---|---|---|---|---|
| 25 | cc | Comparative Example | 160 | 1,000 | 10 | 478 | 396 | 12 | Satisfactory | Occurrence of pitching damage |
| 26 | dd | Comparative Example | 170 | 1,000 | 10 | 476 | 100 | 6 | Poor | Durable |
| 27 | ee | Comparative Example | 190 | 1,000 | 10 | 432 | 452 | 43 | Satisfactory | Occurrence of pitching damage |
| 28 | ff | Comparative Example | 180 | 1,000 | 10 | 442 | 340 | 10 | Poor | Occurrence of pitching damage |
| 29 | gg | Comparative Example | 170 | 1,000 | 10 | 482 | 310 | 12 | Poor | Durable |
| 30 | hh | Comparative Example | 60 | 1,000 | 10 | 631 | 194 | 24 | Poor | Durable |
| 31 | ii | Comparative Example | 180 | 1,000 | 10 | 467 | 389 | 10 | Satisfactory | Occurrence of pitching damage |

[Industrial Applicability]

According to the present invention, it is possible to provide a steel for machine structural use having excellent machinability and having excellent surface fatigue strength after induction hardening. In addition, it is possible to provide an induction-hardened steel component having excellent surface fatigue strength.

Although the C content is 0.40% or more, the steel for machine structural use according to an aspect of the present invention has excellent machinability at the time of performing machining before induction hardening. Therefore, the steel of the present invention is suitable for a steel for induction hardening. In the steel for machine structural use according to the aspect of the present invention, it is possible to reduce the percentage of machining cost in manufacturing costs of steel components such as gears, shafts, and pulleys for automobiles and industrial machinery, and it is possible to improve quality of the components. Therefore, industrial applicability is high.

**Claims**

1. A steel for machine structural use comprising, as a chemical composition, by mass%, C: 0.40% to 0.70%,
   Si: 0.15% to 3.00%,
   Mn: 0.30% to 2.00%,
   Cr: 0.01% or more and less than 0.50%,
   S: 0.003% to 0.070%,
   Bi: more than 0.0001% and 0.0050% or less,
   N: 0.0030% to 0.0075%,
   Al: 0.003% to 0.100%,
   P: 0.050% or less,
   B: 0% to 0.0050%,
   Mo: 0% to 0.20%,
   Ni: 0% to 1.00%,
   Cu: 0% to 1.00%,
   Ca: 0% to 0.0050%,
   Mg: 0% to 0.0050%,
   Zr: 0% to 0.0050%,
   Rem: 0% to 0.0050%,
   Ti: 0% to 0.20%,
   Nb: 0% to 0.20%,
   V: 0% to 0.35%,
   Sb: 0% to 0.015%,
   Te: 0% to 0.20%,
   Pb: 0% to 0.50%, and
   a remainder consisting of Fe and impurities,
   wherein a following Expression (1a) and a following Expression (2a) are satisfied, and a presence density of MnS having an equivalent circle diameter of smaller than 2.0 $\mu$m is 300 pieces/mmor more in a cross section parallel to a longitudinal direction,

$$290 \times C + 50 \times Si + 430 \geq 620 \ ... \ (1a)$$

$$d + 3\sigma < 20 \ ... \ (2a)$$

where,

   C and Si in the Expression (1a) represent C and Si contents by mass%,
   d in the Expression (2a) represents an average equivalent circle diameter of the MnS in an unit of $\mu$m having the equivalent circle diameter of 1.0 $\mu$m or greater, and
   $\sigma$ in the Expression (2a) represents a standard deviation of the equivalent circle diameter of the MnS having the equivalent circle diameter of 1.0 $\mu$m or greater.

2. The steel for machine structural use according to claim 1 comprising, as the chemical composition, by mass%, one or more selected from the group consisting of B: 0.0003% to 0.0050%,
Mo: 0.01% to 0.20%,
Ni: 0.05% to 1.00%, and
Cu: 0.05% to 1.00%.

3. The steel for machine structural use according to claim 1 or 2 comprising, as the chemical composition, by mass%, one or more selected from the group consisting of Ca: 0.0003% to 0.0050%,
Mg: 0.0003% to 0.0050%,
Zr: 0.0003% to 0.0050%, and
Rem: 0.0003% to 0.0050%.

4. The steel for machine structural use according to any one of claims 1 to 3 comprising, as the chemical composition, by mass%, one or more selected from the group consisting of
Ti: 0.005% to 0.20%,
Nb: 0.005% to 0.20%, and
V: 0.005% to 0.35%.

5. The steel for machine structural use according to any one of claims 1 to 4 comprising, as the chemical composition, by mass%, one or more selected from the group consisting of
Sb: 0.0003% to 0.015%,
Te: 0.0003% to 0.20%, and
Pb: 0.01% to 0.50%.

6. An induction-hardened steel component comprising, as a chemical composition, by mass%,
C: 0.40% to 0.70%,
Si: 0.15% to 3.00%,
Mn: 0.30% to 2.00%,
Cr: 0.01% or more and less than 0.50%,
S: 0.003% to 0.070%,
Bi: more than 0.0001% and 0.0050% or less,
N: 0.0030% to 0.0075%,
Al: 0.003% to 0.100%,
P: 0.050% or less,
B: 0% to 0.0050%,
Mo: 0% to 0.20%,
Ni: 0% to 1.00%,
Cu: 0% to 1.00%,
Ca: 0% to 0.0050%,
Mg: 0% to 0.0050%,
Zr: 0% to 0.0050%,
Rem: 0% to 0.0050%,
Ti: 0% to 0.20%,
Nb: 0% to 0.20%,
V: 0% to 0.35%,
Sb: 0% to 0.015%,
Te: 0% to 0.20%,
Pb: 0% to 0.50%, and
a remainder consisting of Fe and impurities,
wherein a following Expression (1b) and a following Expression (2b) are satisfied, and a presence density of MnS having an equivalent circle diameter of smaller than 2.0 $\mu$m is 300 pieces/mm$^2$ or more in a cross section parallel to a longitudinal direction,

$$290{\times}C+50{\times}Si+430{\geq}620 \ ... \ (1b)$$

$$d+3\sigma<20 \ ... \ (2b)$$

where,

C and Si in the Expression (1b) represent C and Si contents by mass%,
d in the Expression (2b) represents an average equivalent circle diameter of the MnS in an unit of $\mu$m having the equivalent circle diameter of 1.0 $\mu$m or greater, and
$\sigma$ in the Expression (2b) represents a standard deviation of the equivalent circle diameter of the MnS having the equivalent circle diameter of 1.0 $\mu$m or greater.

7. The induction-hardened steel component according to claim 6 comprising, as the chemical composition, by mass%, one or more selected from the group consisting of B: 0.0003% to 0.0050%,
Mo: 0.01% to 0.20%,
Ni: 0.05% to 1.00%, and
Cu: 0.05% to 1.00%.

8. The induction-hardened steel component according to claim 6 or 7 comprising, as the chemical composition, by mass%, one or more selected from the group consisting of Ca: 0.0003% to 0.0050%,
Mg: 0.0003% to 0.0050%,
Zr: 0.0003% to 0.0050%, and
Rem: 0.0003% to 0.0050%.

9. The induction-hardened steel component according to any one of claims 6 to 8 comprising, as the chemical composition, by mass%, one or more selected from the group consisting of
Ti: 0.005% to 0.20%,
Nb: 0.005% to 0.20%, and
V: 0.005% to 0.35%.

10. The induction-hardened steel component according to any one of claims 6 to 9 comprising, as the chemical composition, by mass%, one or more selected from the group consisting of
Sb: 0.0003% to 0.015%,
Te: 0.0003% to 0.20%, and
Pb: 0.01% to 0.50%.

**Patentansprüche**

1. Ein Stahl zur Verwendung im Maschinenbau, umfassend, als eine chemische Zusammensetzung, in Massen-%,
C: 0,40% bis 0,70%,
Si: 0,15% bis 3,00%,
Mn: 0,30% bis 2,00%,
Cr: 0,01% oder mehr und weniger als 0,50%,
S: 0,003% bis 0,070%,
Bi: mehr als 0,0001% und 0,0050% oder weniger,
N: 0,0030% bis 0,0075%,
Al: 0,003% bis 0,100%,
P: 0,050% oder weniger,
B: 0% bis 0,0050%,
Mo: 0% bis 0,20%,
Ni: 0% bis 1,00%,
Cu: 0% bis 1,00%,
Ca: 0% bis 0,0050%,
Mg: 0% bis 0,0050%,
Zr: 0% bis 0,0050%,
Rem: 0% bis 0,0050%,
Ti: 0% bis 0,20%,
Nb: 0% bis 0,20%,
V: 0% bis 0,35%,
Sb: 0% bis 0,015%,
Te: 0% bis 0,20%,

Pb: 0 bis 0,50%, und
einen Rest bestehend aus Fe und Verunreinigungen,
wobei ein folgender Ausdruck (1a) und ein folgender Ausdruck (2a) erfüllt sind, und eine Präsenzdichte von MnS mit einem flächengleichen Kreisdurchmesser von kleiner als 2,0 $\mu$m 300 Stück/mm$^2$ oder mehr in einem Querschnitt parallel zu einer Längsrichtung beträgt,

$$290 \times C + 50 \times Si + 430 \geq 620 \ ... \ (1a)$$

$$d + 3\sigma < 20 \ ... \ (2a)$$

wobei

C und Si im Ausdruck (1a) C- und Si-Gehalte in Massen-% darstellen,
d im Ausdruck (2a) einen durchschnittlichen flächengleichen Kreisdurchmesser des MnS in der Einheit $\mu$m, welches den flächengleichen Kreisdurchmesser von 1,0 $\mu$m oder größer aufweist, darstellt, und
$\sigma$ im Ausdruck (2a) eine Standardabweichung des flächengleichen Kreisdurchmessers von MnS, welches den flächengleichen Kreisdurchmesser von 1,0 oder größer aufweist, darstellt.

2. Der Stahl zur Verwendung im Maschinenbau gemäß Anspruch 1, umfassend, als die chemische Zusammensetzung, in Massen-%, eines oder mehrere ausgewählt aus der Gruppe bestehend aus
   B: 0,0003% bis 0,0050%,
   Mo: 0,01% bis 0,20%,
   Ni: 0,05% bis 1,00%, und
   Cu: 0,05% bis 1,00%.

3. Der Stahl zur Verwendung im Maschinenbau gemäß Anspruch 1 oder 2, umfassend, als die chemische Zusammensetzung, in Massen-%, eines oder mehrere ausgewählt aus der Gruppe bestehend aus
   Ca: 0,0003% bis 0,0050%,
   Mg: 0,0003% bis 0,0050%,
   Zr: 0,0003% bis 0,0050%, und
   Rem: 0,0003% bis 0,0050%.

4. Der Stahl zur Verwendung im Maschinenbau gemäß einem der Ansprüche 1 bis 3, umfassend, als die chemische Zusammensetzung, in Massen-%, eines oder mehrere ausgewählt aus der Gruppe bestehend aus
   Ti: 0,005% bis 0,20%,
   Nb: 0,005% bis 0,20%, und
   V: 0,005% bis 0,35%.

5. Der Stahl zur Verwendung im Maschinenbau gemäß einem der Ansprüche 1 bis 4, umfassend, als die chemische Zusammensetzung, in Massen-%, eines oder mehrere ausgewählt aus der Gruppe bestehend aus
   Sb: 0,0003% bis 0,015%,
   Te: 0,0003% bis 0,20%, und
   Pb: 0,01% bis 0,50%.

6. Eine induktionsgehärtete Stahlkomponente, umfassend, als eine chemische Zusammensetzung, in Massen-%,
   C: 0,40% bis 0,70%,
   Si: 0,15% bis 3,00%,
   Mn: 0,30% bis 2,00%,
   Cr: 0,01% oder mehr und weniger als 0,50%,
   S: 0,003% bis 0,070%,
   Bi: mehr als 0,0001% und 0,0050% oder weniger,
   N: 0,0030% bis 0,0075%,
   Al: 0,003% bis 0,100%,
   P: 0,050% oder weniger,
   B: 0% bis 0,0050%,
   Mo: 0% bis 0,20%,

Ni: 0% bis 1,00%,
Cu: 0% bis 1,00%,
Ca: 0% bis 0,0050%,
Mg: 0% bis 0,0050%,
Zr: 0% bis 0,0050%,
Rem: 0% bis 0,0050%,
Ti: 0% bis 0,20%,
Nb: 0% bis 0,20%,
V: 0% bis 0,35%,
Sb: 0% bis 0,015%,
Te: 0% bis 0,20%,
Pb: 0 bis 0,50%, und
einen Rest bestehend aus Fe und Verunreinigungen,
wobei ein folgender Ausdruck (1b) und ein folgender Ausdruck (2b) erfüllt sind, und eine Präsenzdichte von MnS mit einem flächengleichen Kreisdurchmesser von kleiner als 2,0 $\mu$m 300 Stück/mm$^2$ oder mehr in einem Querschnitt parallel zu einer Längsrichtung beträgt,

$$290 \times C + 50 \times Si + 430 \geq 620 \ ... \ (1b)$$

$$d + 3\sigma < 20 \ ... \ (2b)$$

wobei

C und Si im Ausdruck (1b) C- und Si-Gehalte in Massen-% darstellen,
d im Ausdruck (2b) einen durchschnittlichen flächengleichen Kreisdurchmesser des MnS in der Einheit $\mu$m, welches den flächengleichen Kreisdurchmesser von 1,0 $\mu$m oder größer aufweist, darstellt, und
$\sigma$ im Ausdruck (2b) eine Standardabweichung des flächengleichen Kreisdurchmessers von MnS, welches den flächengleichen Kreisdurchmesser von 1,0 oder größer aufweist, darstellt.

7. Die induktionsgehärtete Stahlkomponente gemäß Anspruch 6, umfassend, als die chemische Zusammensetzung, in Massen-%, eines oder mehrere ausgewählt aus der Gruppe bestehend aus
B: 0,0003% bis 0,0050%,
Mo: 0,01% bis 0,20%,
Ni: 0,05% bis 1,00%, und
Cu: 0,05% bis 1,00%.

8. Die induktionsgehärtete Stahlkomponente gemäß Anspruch 6 oder 7, umfassend, als die chemische Zusammensetzung, in Massen-%, eines oder mehrere ausgewählt aus der Gruppe bestehend aus
Ca: 0,0003% bis 0,0050%,
Mg: 0,0003% bis 0,0050%,
Zr: 0,0003% bis 0,0050%, und
Rem: 0,0003% bis 0,0050%.

9. Die induktionsgehärtete Stahlkomponente gemäß einem der Ansprüche 6 bis 8, umfassend, als die chemische Zusammensetzung, in Massen-%, eines oder mehrere ausgewählt aus der Gruppe bestehend aus
Ti: 0,005% bis 0,20%,
Nb: 0,005% bis 0,20%, und
V: 0,005% bis 0,35%.

10. Die induktionsgehärtete Stahlkomponente gemäß einem der Ansprüche 6 bis 9, umfassend, als die chemische Zusammensetzung, in Massen-%, eines oder mehrere ausgewählt aus der Gruppe bestehend aus
Sb: 0,0003% bis 0,015%,
Te: 0,0003% bis 0,20%, und
Pb: 0,01% bis 0,50%.

**Revendications**

1. Acier pour utilisation en structure de machine comprenant, en tant que composition chimique, en % en masse,
C : 0,40 % à 0,70 %,
Si : 0,15 % à 3,00 %,
Mn : 0,30 % à 2,00 %,
Cr : 0,01 % ou plus et moins de 0,50 %,
S : 0,003 % à 0,070 %,
Bi : plus de 0,0001 % et 0,0050 % ou moins,
N : 0,0030 % à 0,0075 %,
Al : 0,003 % à 0,100 %,
P : 0,050 % ou moins,
B : 0 % à 0,0050 %,
Mo : 0 % à 0,20 %,
Ni : 0 % à 1,00 %,
Cu : 0 % à 1,00 %,
Ca : 0 % à 0,0050 %,
Mg : 0 % à 0,0050 %,
Zr : 0 % à 0,0050 %,
Rem (éléments des terres rares) : 0 % à 0,0050 %,
Ti : 0 % à 0,20 %,
Nb : 0 % à 0,20 %,
V : 0 % à 0,35 %,
Sb : 0 % à 0,015 %,
Te : 0 % à 0,20 %,
Pb : 0 % à 0,50 %, et
le reste étant constitué de Fe et d'impuretés,
dans lequel l'expression (1a) et l'expression (2a) qui suivent sont satisfaites, et
la densité de présence du MnS ayant un diamètre de cercle équivalent inférieur à 2,0 $\mu$m est de 300 fragments/mm$^2$
ou plus dans une section transversale parallèle à une direction longitudinale,

$$290 \times C + 50 \times Si + 430 \geq 620 \qquad \ldots (1a)$$

$$d + 3\sigma < 20 \qquad \ldots (2a)$$

où,

C et Si dans l'expression (1a) représentent les teneurs en C et Si en % en masse,
d dans l'expression (2a) représente le diamètre de cercle équivalent moyen du MnS en $\mu$m ayant un diamètre de cercle équivalent de 1,0 $\mu$m ou plus, et
$\sigma$ dans l'expression (2a) représente l'écart type du diamètre de cercle équivalent du MnS ayant un diamètre de cercle équivalent de 1,0 $\mu$m ou plus.

2. Acier pour utilisation en structure de machine selon la revendication 1 comprenant, en tant que composition chimique, en % en masse, un ou plusieurs choisis dans le groupe constitué par
B : 0,0003 % à 0,0050 %,
Mo : 0,01 % à 0,20 %,
Ni : 0,05 % à 1,00 %, et
Cu : 0,05 % à 1,00 %.

3. Acier pour utilisation en structure de machine selon la revendication 1 ou 2 comprenant, en tant que composition chimique, en % en masse, un ou plusieurs choisis dans le groupe constitué par
Ca : 0,0003 % à 0,0050 %,
Mg : 0,0003 % à 0,0050 %,
Zr : 0,0003 % à 0,0050 %, et
Rem : 0,0003 % à 0,0050 %.

**4.** Acier pour utilisation en structure de machine selon l'une quelconque des revendications 1 à 3 comprenant, en tant que composition chimique, en % en masse, un ou plusieurs choisis dans le groupe constitué par
Ti : 0,005 % à 0,20 %,
Nb : 0,005 % à 0,20 %, et
V : 0,005 % à 0,35 %.

**5.** Acier pour utilisation en structure de machine selon l'une quelconque des revendications 1 à 4 comprenant, en tant que composition chimique, en % en masse, un ou plusieurs choisis dans le groupe constitué par
Sb : 0,0003 % à 0,015 %,
Te : 0,0003 % à 0,20 %, et
Pb : 0,01 % à 0,50 %.

**6.** Composant en acier trempé par induction comprenant, en tant que composition chimique, en % en masse,
C : 0,40 % à 0,70 %,
Si : 0,15 % à 3,00 %,
Mn : 0,30 % à 2,00 %,
Cr : 0,01 % ou plus et moins de 0,50 %,
S : 0,003 % à 0,070 %,
Bi : plus de 0,0001 % et 0,0050 % ou moins,
N : 0,0030 % à 0,0075 %,
Al : 0,003 % à 0,100 %,
P : 0,050 % ou moins,
B : 0 % à 0,0050 %,
Mo : 0 % à 0,20 %,
Ni : 0 % à 1,00 %,
Cu : 0 % à 1,00 %,
Ca : 0 % à 0,0050 %,
Mg : 0 % à 0,0050 %,
Zr : 0 % à 0,0050 %,
Rem : 0 % à 0,0050 %,
Ti : 0 % à 0,20 %,
Nb : 0 % à 0,20 %,
V : 0 % à 0,35 %,
Sb : 0 % à 0,015 %,
Te : 0 % à 0,20 %,
Pb : 0 % à 0,50 %, et
le reste étant constitué de Fe et d'impuretés,
dans lequel l'expression (1b) et l'expression (2b) qui suivent sont satisfaites, et
la densité de présence du MnS ayant un diamètre de cercle équivalent inférieur à 2,0 $\mu$m est de 300 fragments/mm$^2$
ou plus dans une section transversale parallèle à une direction longitudinale,

$$290 \times C + 50 \times Si + 430 \geq 620 \qquad \ldots (1b)$$

$$d + 3\sigma < 20 \qquad \ldots (2b)$$

où

C et Si dans l'expression (1b) représentent les teneurs en C et Si en % en masse,
d dans l'expression (2b) représente le diamètre de cercle équivalent moyen du MnS en $\mu$m ayant un diamètre de cercle équivalent de 1,0 $\mu$m ou plus, et
$\sigma$ dans l'expression (2b) représente l'écart type du diamètre de cercle équivalent du MnS ayant un diamètre de cercle équivalent de 1,0 $\mu$m ou plus.

**7.** Composant en acier trempé par induction selon la revendication 6 comprenant, en tant que composition chimique, en % en masse, un ou plusieurs choisis dans le groupe constitué par
B : 0,0003 % à 0,0050 %,

Mo : 0,01 % à 0,20 %,
Ni : 0,05 % à 1,00 %, et
Cu : 0,05 % à 1,00 %.

8. Composant en acier trempé par induction selon la revendication 6 ou 7 comprenant, en tant que composition chimique, en % en masse, un ou plusieurs choisis dans le groupe constitué par
Ca : 0,0003 % à 0,0050 %,
Mg : 0,0003 % à 0,0050 %,
Zr : 0,0003 % à 0,0050 %, et
Rem : 0,0003 % à 0,0050 %.

9. Composant en acier trempé par induction selon l'une quelconque des revendications 6 à 8 comprenant, en tant que composition chimique, en % en masse, un ou plusieurs choisis dans le groupe constitué par
Ti : 0,005 % à 0,20 %,
Nb : 0,005 % à 0,20 %, et
V : 0,005 % à 0,35 %.

10. Composant en acier trempé par induction selon l'une quelconque des revendications 6 à 9 comprenant, en tant que composition chimique, en % en masse, un ou plusieurs choisis dans le groupe constitué par
Sb : 0,0003 % à 0,015 %,
Te : 0,0003 % à 0,20 %, et
Pb : 0,01 % à 0,50 %.

## FIG. 1

## FIG. 2

**EP 3 366 800 B1**

**REFERENCES CITED IN THE DESCRIPTION**

**Patent documents cited in the description**

- JP 2007131871 A
- JP 2012219334 A
- JP 4659139 B
- JP 2003293081 A